# EUROPEAN PATENT APPLICATION

(11) **EP 4 446 034 A1**
(43) Date of publication of application: **16.10.2024**
(21) Application number: 22903851.8
(22) Date of filing: 13.10.2022
(51) Int. Cl.: B22F 5/00, B22F 1/052, B22F 1/06, B22F 3/02, C23C 26/00

(54) **ELECTRODE FOR ELECTRICAL DISCHARGE SURFACE TREATMENT AND METHOD FOR PRODUCING SAME**

(30) Priority: 06.12.2021 JP 2021197761
(71) Applicant: IHI Corporation, Tokyo 135-8710 (JP)
(72) Inventor: YOSHIZAWA Hiroki, Tokyo 135-8710 (JP); WATANABE Mitsutoshi, Tokyo 135-8710 (JP); KUDO Takafumi, Tokyo 135-8710 (JP)
(74) Representative: MERH-IP Matias Erny Reichl Hoffmann Patentanwälte PartG mbB
(86) International application number: PCT/JP2022/038135
(87) International publication number: WO 2023/105917

(57) **Abstract**

An electrode (15) includes a sintered body made of a powder containing any of a Co-base alloy, a Ni-base alloy, and an Fe-based alloy as the component thereof. The sintered body includes a fine powder having a median diameter of 3.0 um or less and formed in a scaly shape. A specific surface area of the sintered body has a value in a range from 0.8 m²/g to 10 m²/g. An electrical resistivity of the sintered body has a value in a range from 3 mΩ·cm to 30 mΩ·cm.

## Description

### TECHNICAL FIELD

The present disclosure relates to an electrode for electrical discharge surface treatment and a method for producing same.

### BACKGROUND ART

The electrical discharge surface treatment is a technique for forming a functional coating on a workpiece by electric discharges using an electrode containing materials such as metal or ceramics. In the electrical discharge surface treatment, a voltage is applied between the electrode and the workpiece, and a pulsed discharge is repeatedly generated between the electrode and the workpiece. With the discharges, the electrode material moves toward the workpiece in a molten or semi-molten state, and a coating film consisting of the electrode material or a reactive substance of the electrode material is formed on the surface of the workpiece. The coating film formed by the electrical discharge surface treatment is stable and excellent in durability and abrasion resistance (see Patent Literature 1).

### CITATION LIST

### PATENT LITERATURE

Patent Literature 1: JP 2015-140461 A

### SUMMARY OF THE INVENTION

### TECHNICAL PROBLEM

An electrode for electrical discharge surface treatment is produced by compressing a raw material powder such as a Co-base alloy to form a green compact, and sintering the green compact in vacuum, an inert gas or a reducing gas atmosphere. The raw material powder includes a metal powder which is refined by pulverization using a jet mill or the like before compression molding so that the molten or semi-molten electrode material is easily transferred to the workpiece during discharges. However, the shape and size distribution of the refined raw powder are easily affected by changes in the environment and slight variations in components during the producing process, which includes the pulverization and classification processes, and these changes affect the stable generation of discharge and hinder the smooth progress of the coating film formation.

In view of such situation, an object of the present disclosure is to provide an electrode for electrical discharge surface treatment and a method for producing the same, which can stably generate discharge during a coating film formation.

### TECHNICAL SOLUTION

An electrode according to the first aspect of the present disclosure is an electrode for forming a coating film on a surface of a workpiece, made of a material of an electrode material or a reactive substance of the material of the electrode, by electrical discharge surface treatment that generates discharges between the electrode and the workpiece. The electrode includes a sintered body as the electrode, made of a powder containing any of a Co-base alloy, a Ni-base alloy, and an Fe-based alloy as a raw material thereof, wherein the sintered body includes a fine powder of the raw material formed in scaly shapes, a median diameter of the fine powder is 3.0 um or less, a specific surface area of the sintered body has a value in a range from 0.8 m²/g to 10 m²/g, and an electrical resistivity of the sintered body has a value in a range from 3 mΩ·cm to 30 mΩ·cm.

In the first aspect, the sintered body may further include a coarse powder of the raw material. A particle size of the coarse powder may be larger than that of the fine powder, and the coarse powder may include particles with a maximum particle size of 53 um. A proportion of the coarse powder in a mixed powder of the fine powder and the coarse powder may be 70 wt% or less. A density of the sintered body may have a value in a range from 3.0 g/cm³ to 5.0 g/cm³.

A method according to the second aspect of the present disclosure is a method for producing an electrode for forming a coating film on a surface of a workpiece, made of a material of an electrode material or a reactive substance of the material of the electrode, by electrical discharge surface treatment that generates discharges between the electrode and the workpiece. The method includes: producing granulated powder by granulating a powder containing any of a Co-base alloy, a Ni-base alloy, and an Fe-based alloy as a raw material thereof; forming a green compact by compression molding of the granulated powder; forming a sintered body as the electrode by sintering the green compact, wherein the powder includes a fine powder having a median diameter of 3.0 um or less and formed in scaly shapes, a pressure in the compression molding and a sintering temperature in the sintering are set to values at which a specific surface area of the sintered body has a value in a range from 0.8 m²/g to 10 m²/g and an electrical resistivity of the sintered body has a value in a range from 3 mΩ·cm to 30 mΩ·cm, the pressure in the compression molding is set to a value in a range from 50 MPa to 300 MPa, and the sintering temperature is set to a value in a range from 450°C to 950°C.

In the second aspect, the sintered body may further include a coarse powder of the raw material. A particle size of the coarse powder may be larger than that of the fine powder. The coarse powder may include particles with a maximum particle size of 53 um. A proportion of the coarse powder in a mixed powder of the fine powder and the coarse powder may be 70 wt% or less.

An electrode according to the third aspect of the present disclosure is an electrode for forming a coating film on a surface of a workpiece, made of a material of an electrode material or a reactive substance of the material of the electrode, by electrical discharge surface treatment that generates discharges between the electrode and the workpiece. The electrode includes a sintered body as the electrode, made of a powder containing any of Co, Ni, and Fe as a single raw material thereof, wherein the sintered body includes a fine powder of the raw material formed in scaly shapes, a median diameter of the fine powder is 4 um or less, a specific surface area of the sintered body has a value in a range from 0.8 m²/g to 1.2 m²/g, and an electrical resistivity of the sintered body has a value in a range from 3 mΩ·cm to 30 mΩ·cm.

In the third aspect, a density of the sintered body may have a value in a range from 2.4 g/cm³ to 3.0 g/cm³.

A method according to the fourth aspect of the present disclosure is a method for producing an electrode for forming a coating film on a surface of a workpiece, made of a material of an electrode material or a reactive substance of the material of the electrode, by electrical discharge surface treatment that generates discharges between the electrode and the workpiece. The method includes: producing granulated powder by granulating a powder containing any of Co, Ni, and Fe as a single raw material thereof; forming a green compact by compression molding of the granulated powder; forming a sintered body as the electrode by sintering the green compact, wherein the powder includes a fine powder having a median diameter of 3.0 um or less and formed in scaly shapes, a pressure in the compression molding and a sintering temperature in the sintering are set to values at which a specific surface area of the sintered body has a value in a range from 0.8 m²/g to 1.2 m²/g and an electrical resistivity of the sintered body has a value in a range from 3 mΩ·cm to 30 mΩ·cm; the pressure in the compression molding is set to a value in a range from 10 MPa to 30 MPa; and the sintering temperature is set to a value in a range from 450°C to 950°C.

### EFFECT OF THE INVENTION

According to the present disclosure, it is possible to provide an electrode for electrical discharge surface treatment and a method for producing the same, which can stably generate discharge during a coating film formation.

### BRIEF DESCRIPTION OF THE DRAWINGS

FIG. 1 is a schematic diagram showing an example of a configuration of an electrical discharge surface treatment apparatus according to an embodiment of the present disclosure.
FIG. 2 is a flowchart showing a producing method of an electrode for electrical discharge surface treatment according to the embodiment of the present disclosure.
FIG. 3 is a diagram showing an example of a configuration of a pulverization system according to the embodiment of the present disclosure.
FIG. 4 is a diagram showing a compression molding method according to the embodiment of the present disclosure.
FIG. 5 is a diagram showing a sintering method of a green compact according to the embodiment of the present disclosure.
FIG. 6 is an electron microscopic image (SEM image) showing an example of a cross section of an electrode formed by the producing method according to the present embodiment.
FIG. 7 is an electron microscopic images (SEM images) showing an example of a cross section of an electrode formed by the producing method according to the present embodiment, FIG. 7(a) is an observation image at a low magnification, and FIG. 7(b) is an observation image at a high magnification.
FIG. 8 is an electron microscopic image (SEM image) showing an example of a cross section of an electrode formed by the producing method according to the present embodiment.

### DESCRIPTION OF EMBODIMENTS

Some embodiments of the present disclosure will be described below with reference to the drawings.

### (Overview)

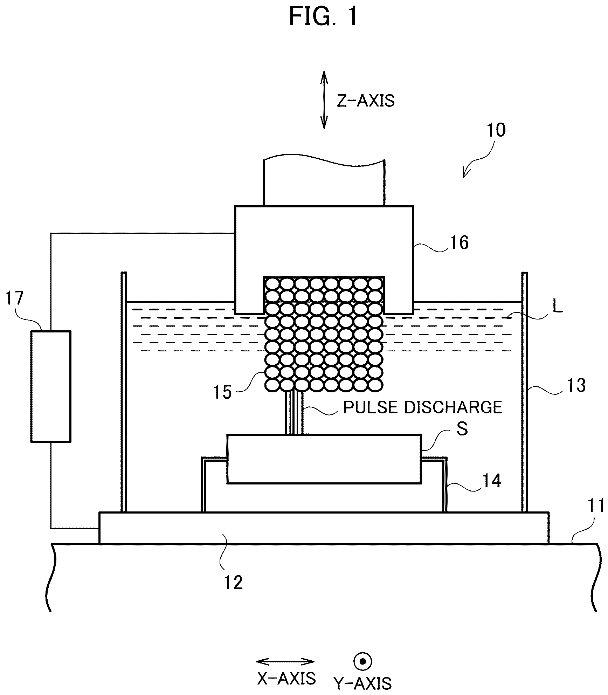

An electrical discharge surface treatment apparatus 10 provided with an electrode 15 according to each embodiment will be described below. FIG. 1 is a schematic diagram showing an example of a configuration of the electrical discharge surface treatment apparatus 10 which performs the electrical discharge surface treatment. The electrical discharge surface treatment apparatus 10 is provided with a bed 11, and a table 12 is provided in the bed 11. A liquid bath 13 is provided in the table 12. The liquid bath 13 stores electrically insulating liquid L such as insulating oil. The liquid bath 13 is provided with a work holder 14. The work holder 14 holds a workpiece S formed of a metal material or the like.

An electrode holder 16 is provided above the table 12. The electrode holder 16 is provided movably in the X-axis direction, Y-axis direction and Z-axis direction, and holds the electrode 15 for electrical discharge surface treatment. The electrode holder 16 is rotatable with the Z-axis as a rotation axis (rotation center). The electrode 15 is positioned relative to the workpiece S by moving the electrode holder 16 while the electrode 15 is held by the electrode holder 16.

The discharge power supply 17 includes a discharge circuit including a power supply, a capacitor, a switching element, a resistor, and the like, and a control circuit for controlling the operation of the discharge circuit. The discharge power supply 17 can use a known circuit configuration, for example, as shown in Japanese Patent Laid-Open Publication No. 2005-213554. An output of the discharge power supply 17 is electrically connected to the work holder 14 and the electrode holder 16, and repeatedly applies pulsed voltage for generating discharges between the electrode 15 and the workpiece S. The pulse width of the current during the discharge is set to a value from 2 µs to 30 us, for example. The current waveform during the discharge changes stepwise, for example. In this case, the current value immediately after the start of discharge is set to 30A or 40A, and the subsequent current value is set to a value from 1A to 25A. The interval time (pause time) between discharges is, for example, 60 µs to 70 µs. The current value, the pulse width and the interval time are not limited to the aforementioned values and the current waveform is not also limited to the aforementioned waveform. These are appropriately adjusted according to the respective configurations of the electrode 15 and the workpiece S, the components of the coating film to be formed, the film formation speed thereof, and the like.

The electrode 15 is a sintered body of a powder (a raw material powder) made from the metal components of the coating film to be formed by the electrical discharge surface treatment. The sintered body is a porous body, and its density is smaller than the true density of the raw material powder. The structure of the electrode 15 and the producing method will be described later.

During the electrical discharge surface treatment, the electrode 15 is immersed in the electrically insulating liquid L and reciprocates along the Z-axis with the electrode holder 16 (see FIG. 1). While the electrode 15 is reciprocating, the discharge power supply 17 repeatedly generates a pulsed discharge between the electrode 15 and the workpiece S. When a discharge occurs between the electrode 15 and the workpiece S, a part of the material of the electrode 15 (hereinafter referred to as electrode material) is separated from the electrode 15 by a blast or an electrostatic force. The electrode material having been separated from the electrode 15 is temporarily and locally melted or semi-melted by the heat of the discharge plasma generated between the electrode 15 and the workpiece S. Incidentally, the temperature of the discharge plasma exceeds 3000 °C. The electrode material in the molten or semi-molten state moves toward the workpiece S, reaches the surface of the workpiece S, and re-solidifies. When the pulsed discharge is continuously generated, the electrode material successively moves from the tip of the electrode 15 to the surface of the workpiece S, and is deposited on the workpiece S while resolidifying. That is, a coating film made of the electrode material is formed on the surface of the workpiece S. There is also a case in which the electrode material dropped from the electrode 15 after being melted reacts with the component in the electrically insulating liquid L, is deposited on the surface of the workpiece S as a reactant, and is finally formed in a coating film. In the aforementioned configuration, the electrical discharge surface treatment is performed in the electrically insulating liquid L. However, the electrical discharge surface treatment according to the present disclosure may be performed in gas.

In order to stably deposit the electrode material or the reactive substance of the electrode material on the surface (i.e., the substrate surface) of the workpiece S, it is necessary to make the powder of the electrode material in a molten or semi-molten state. In order to obtain these states, it is important to keep heat around the plasma on the electrode 15 side, and it is necessary to reduce the thermal conductivity of the electrode 15. There is a negative correlation between thermal conductivity and electrical resistivity. That is, low thermal conductivity results in low electrical conductivity, in other words, high electrical resistivity. In the present embodiment, the electrical resistivity of the electrode is set in the following range. When the electrical resistivity is within this range, the period of the pulse discharge can be sufficiently followed and the thermal conductivity can be moderately suppressed. Thereby, the heat of the discharge plasma is less likely to escape from the tip of the electrode, and the temperature of the tip of the electrode can be maintained at a high temperature.

In the present embodiment, focusing on the specific surface area correlated with the electrical resistivity, by setting the specific surface area of the electrode 15 to a value within a predetermined range, the electrical resistivity was set to a value in the range from 1 mΩ·cm to 30 mΩ·cm, which can obtain a stable discharge. The setting range of the specific surface area varies according to the components of the electrode 15.

By setting the specific surface area for obtaining the electrical resistivity described above, it is possible to moderately suppress heat conduction in the electrode 15 while making the discharge follow the period of the pulse voltage. That is, it is possible to stably generate the discharge while forming the coating film. The specific surface area is obtained by measurement based on the well-known BET method (Brunauer-Emmett-Teller Method). The electrical resistivity is obtained by measurement based on the four-terminal method. The measurement based on the BET method conforms to the Japanese Industrial Standard JIS Z 8830.

Next, the producing method of the electrode 15 and the electrode 15 according to the embodiment of the present disclosure will be described.

### (First Embodiment: Electrode)

The electrode 15 according to the first embodiment is a sintered body made of a powder containing any of a Co-base alloy, a Ni-base alloy, and an Fe-based alloy as a raw material thereof. Hereinafter, this powder is referred to as a raw material powder thereof. The Co-base alloy is such as Stellite (registered trademark) #31 (Cr: 25 wt%, Ni: 10 wt%, W: 7 wt%, residual Co), Trivalloy (registered trademark) T-800 (Mo: 28 wt%, Si: 3.4 wt%, Cr: 18 wt%, residual Co), CoCrAlY alloy or CoNiCrAlY alloy. The Ni-base alloy is such as Inconel (registered trademark) #718, NiCrAlY alloy or NiCoCrAlY alloy. The Fe-based alloy is austenitic stainless steel such as SUS304 (JIS) and SUS316 (JIS). However, the components of the raw material are not limited to the aforementioned examples, and may be Co-based alloy, Ni-based alloy, or Fe-based alloy having other component ratios.

The sintered body of the electrode 15 according to the first embodiment includes a fine powder (i.e., sintered particles of the fine powder) of the aforementioned raw material as the constituent powder. Alternatively, the sintered body of the electrode 15 contains a mixed powder (i.e., sintered particles of the mixed powder) of the fine powder of the above-mentioned raw material and a coarse powder of the above-mentioned raw material as the constituent powder. The coarse powder has the same components as the fine powder and includes particles larger in particle size than the fine powder. The proportion of the coarse powder in the mixed powder of the fine powder and the coarse powder is 70 wt% or less.

The median diameter (D50) of the fine powder is 3.0 um or less, for example, 1.5 um. On the other hand, the coarse powder is, for example, a powder under 53 pm or 22 um. That is, a powder having a maximum particle size of 53 um or a powder having a maximum particle size of 22 um. These are available as the raw powder. Alternatively, the powder may have a maximum particle size of approximately 22 to 53 um. This powder may be obtained, for example, by using a 280 mesh (53 um apertures) sieve in combination with a 600 mesh (22 um apertures) sieve during the classification.

The specific surface area of the electrode 15 according to the first embodiment has a value in the range of 1.3 m²/g to 8.0 m²/g, and the electrical resistivity has a value in the range of 1 mΩ·cm to 30 mΩ·cm. The specific surface area and the electrical resistivity are kept within the aforementioned range by adjusting the content of the fine powder, the set pressure in the compression molding, and the sintering temperature in the sintering of the green compact. The specific surface area and the electrical resistivity tend to increase as the content of the fine powder is higher. The density of the electrode 15 according to the first embodiment has a range from 3.0 g/cm³ to 5.0 g/cm³.

Since the specific surface area and the electrical resistivity have the values described above, the density of the electrode is not excessively large and the heat conduction in the electrode 15 is also suppressed. In addition, since the high temperature region (i.e., plasma) at the tip of the electrode generated by the electric discharge is kept warm, the temperature at the tip of the electrode 15 becomes high and the electrode material is likely to be melted or semi-melted. Therefore, it is possible to stably generate the electric discharge in the coating film formation.

### (First Embodiment: Electrode Producing Method)

Next, a producing method of the electrode 15 according to the first embodiment will be described. The electrode 15 according to the first embodiment is formed by sintering a powder obtained by adding a coarse powder at a ratio of 0 to 70 wt% to the total amount of the powder to a fine powder obtained by pulverizing the raw powder.

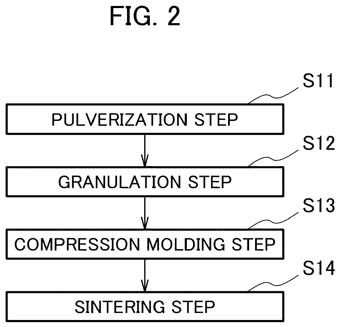

FIG. 2 is a flowchart showing the producing method of the electrode 15. As shown in this figure, the producing method according to the first embodiment includes a pulverization step S11, a granulation step S12, a compression molding step S13, and a sintering step S14.

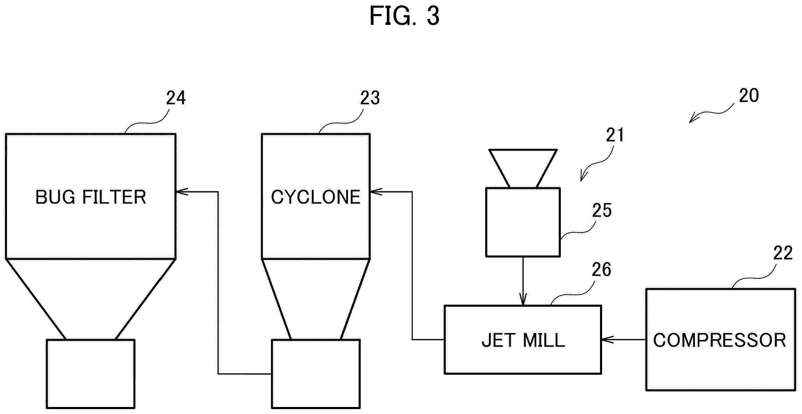

First, the pulverization system 20 used in the pulverization step S11 will be described. FIG. 3 is a diagram showing an example of the configuration of the pulverization system 20. The pulverization system 20 includes a jet mill 21 for pulverizing the raw material powder described above, a compressor 22 for supplying compressed air to the jet mill 21, a cyclone 23 for classifying the powder pulverized by the jet mill 21, and a bug filter 24 for collecting the powder passed through the cyclone 23. A ball mill or a bead mill may be used instead of the jet mill 21.

The jet mill 21 includes a feed section 25 and a pulverization chamber 26. The jet mill 21 forms a high-speed swirling flow in the pulverization chamber 26 using compressed air supplied from the compressor 22. When the raw material powder is supplied from the feed section 25 to the pulverization chamber 26, the particles of the raw material powder collide with each other by the swirling flow and are thus pulverized. The pulverized raw material powder is discharged from the pulverization chamber 26 and supplied to the cyclone 23. The cyclone 23 recovers the powder having a relatively large particle size using a swirling flow. The powder recovered by the cyclone 23 is returned to the feed section 25 and pulverized again in the pulverization chamber 26. On the other hand, the powder having a relatively small particle size passes through the cyclone 23 and is collected by the bug filter 24.

The raw material powder of the electrode 15 may be formed by, for example, an atomization method. Therefore, the raw material powder, which is already classified into a powder having a predetermined maximum particle size, can be used. For example, a powder under 53 um or 22 um under (i.e., a powder having a maximum particle size of 53 um or 22 µm) may be used as the raw material powder.

Next, each process will be described in detail below. The pulverization step S11 is a step of forming a fine powder to be used for granulation in the granulation step S12 from a raw material powder as a material (hereinafter referred to as an electrode material) of the electrode 15. In the pulverization step S11, the raw material powder is pulverized using a pulverization device such as a jet mill 21. The compressor pressure in the pulverization is, for example, 1.2 MPa.

The pulverized raw powder is classified depending on the particle size by a cyclone 23, and the powder having a large particle size is recovered and returned to the jet mill 21. The powder having a smaller particle size than that of the powder recovered by the cyclone 23 passes through the cyclone 23 and is collected by the bug filter 24.

During the pulverization using the jet mill 21, the surfaces of the particles of the raw powder are gradually filed by mutual collision between the particles. As a result, the powder becomes a fine powder including particles deformed in a generally scaly shape (i.e., a scaly powder) having a median diameter of 3.0 um or less, and is collected by the bug filter 24.

The particles of the scaly powder have flat shapes that develops in a planar shape and have specific surface areas larger than those of the blocky particles. Therefore, it is possible to increase the specific surface area of the electrode compared with the case where only the blocky powder is used for forming the electrode. For example, while the specific surface area of the spherical powder having a particle size of 1 um is 0.75 m²/g, the specific surface area of the fine powder of the present embodiment is larger than that, which is 1.3 to 8.0 m²/g. That is, it is possible to easily obtain the desired specific surface area by adjusting the amount of the scaly powder in the granulation step S12 described later.

The median diameter (D50) of the fine powder obtained by the pulverization step S11 is 3.0 um or less, for example, 1.5 um. The particle size distribution of the particles can be evaluated by a well-known measurement using, for example, a laser diffraction/scattering method.

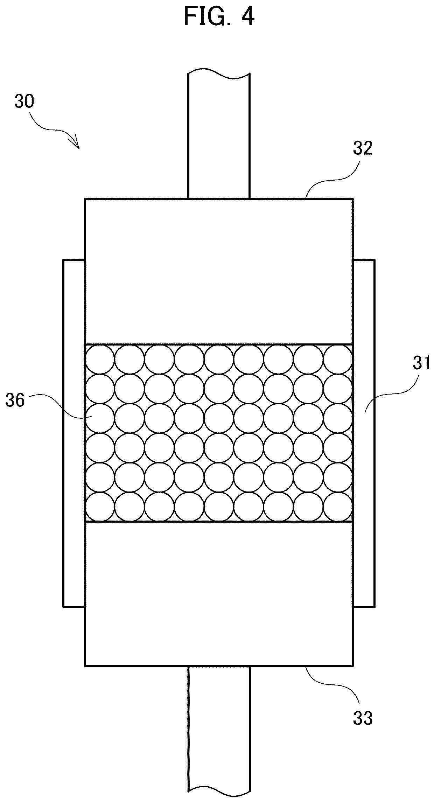

The granulation step S12 is a step of generating a granulated powder 36 (see FIG. 4), which is a material of a green compact, from a fine powder or a mixed powder of a fine powder and a coarse powder. In the granulation step S12, a slurry containing a fine powder or a slurry containing a mixed powder of a fine powder and a coarse powder is first produced. As described above, the coarse powder has the same components as the fine powder, and the particle size is larger than that of the fine powder. For the coarse powder, the raw material powder whose maximum particle size is predetermined by the classification or the powder recovered by the cyclone 23 during the pulverization step S11 can be applied. When the raw material of the slurry includes the coarse powder, the coarse powder is mixed with the fine powder at a ratio of 70 wt% or less to the total amount of the powder. The greater the content of the fine powder, the better the smoothness and adhesion of the coating. On the other hand, the greater the content of the coarse powder, the shorter the time required for the pulverization and the classification, which can reduce the production cost. The term "fine powder only" is not limited to the strict meaning, but also includes the case where a minute amount of coarse powder is mixed which does not affect the performance of the electrode 15 formed from the fine powder.

Hereinafter, for convenience of explanation, in the description of the granulation step S12, a fine powder as a single component as a raw material of a slurry or a mixed powder of a fine powder and a coarse powder as a raw material of a slurry is referred to as an intermediate powder.

The specific surface area of the intermediate powder according to the first embodiment has a value in the range from 1.8 m²/g to 12.0 m²/g. The value of the specific surface area varies according to the content of the coarse powder in the intermediate powder, and the higher the content, the larger the value. For example, when the raw material powder is Stellite (registered trademark) 31, the specific surface area of the intermediate powder is 1.8 to 3.6 m²/g when the fine powder is 30 wt% and the coarse powder is 70 wt%, the specific surface area of the intermediate powder is 3.0 to 5.0 m²/g when the fine powder is 50 wt% and the coarse powder is 50 wt%, and the specific surface area of the intermediate powder is 6.0 to 12.0 m²/g when the fine powder is 100 wt%. The variation in the range of the specific surface area with respect to the content is the same for other raw materials. For example, even when the raw material powder is Inconel (registered trademark) #718, the specific surface area of the intermediate powder is 4.8 to 9.5 m²/g when the fine powder is 80 wt% and the coarse powder is 20 wt%. In this way, the specific surface area of the intermediate powder is slightly higher than that of the sintered body with the same weight ratio, and decreases by the sintering.

When the total amount of the intermediate powder is 100 wt%, for example, the slurry is prepared by mixing the intermediate powder and 2 to 3 wt% of the binder in 200 wt% of an organic solvent and stirring them. The binder is, for example, a mixture of a thermoplastic resin and a wax. However, the binder may be a thermoplastic resin alone. If the binder is watersoluble, the intermediate powder and the binder are mixed in water instead of an organic solvent.

The binder is added to improve the compression moldability of the intermediate powder and make it easier to maintain the shape of the green compact. For example, a thermoplastic resin such as polypropylene (PP), polyethylene (PE), polymethylmethacrylate (PMMA), polyvinyl alcohol (PVA), or a polysaccharide material such as agar is used for the binder. It is preferable to use a binder that has high volatility among general-purpose polymeric materials and has a relatively small amount of residual components.

Wax is added to improve the fluidity of the intermediate powder and to improve the transmission of press pressure during the compression molding. Stearic acid, acrylic resin, paraffin wax or the like can be used for the wax.

After producing the slurry, it is granulated using a spray dryer or the like to form a granulated powder. When performing the granulation using the spray dryer, the slurry is injected from a nozzle of the spray dryer into a container of the spray dryer. The inside of the container is filled with high-temperature nitrogen gas, etc., and by injecting the slurry into this atmosphere, the solvent contained in the slurry is dried and removed, and the granulated powder is formed.

The compression molding step S13 is a step of compression molding the granulated powder 36 to form a green compact. FIG. 4 is a diagram showing an example of a die 30 for performing the compression molding. As shown in FIG. 4, the die 30 includes a main die 31, an upper punch 32, and a lower punch 33. The main die 31 is formed into a hollow cylinder having the same cross-sectional shape as that of the electrode 15. The main die 31 is filled with the granulated powder 36. The upper punch 32 is provided on the upper part of the main die 31 and is movable in the vertical direction. The upper punch 32 pushes the granulated powder 36 in the main die 31 downward by an upper ram (not shown) of a press device. The lower punch 33 is provided below the main die 31 and is movable in the vertical direction. The lower punch 33 pushes the granulated powder 36 in the main die 31 upward by a lower ram (not shown) of the press device. That is, the granulated powder 36 in the main die 31 is pressurized from above and below. Thus, the granulated powder 36 in the main mold 31 is compression-molded to form the green compact. The set pressure (surface pressure) during the compression molding is approximately constant regardless of the mixing ratio of the fine powder and the coarse powder, and is 50 to 300 MPa (e.g., 50 MPa).

The green compact 40 may be further pressurized by cold isostatic pressing (CIP) after being compression-molded using the die 30. In this case, the set value of pressurization using the die 30 is set to a lower value than the set value of pressurization by CIP. By using CIP, the green compact can be pressurized isotropically. The set value of CIP is set in the range of 50 to 300 MPa depending on the mixing ratio of the fine powder and the coarse powder. The set value varies depending on the content of coarse powder in the intermediate powder, and the higher the content, the larger it becomes. For example, when the raw material powder is Stellite (registered trademark) #31, the set value is 50 to 100 MPa when the fine powder is 30 wt% and the coarse powder is 70 wt%, the set value is 80 to 120 MPa when the fine powder is 50 wt% and the coarse powder is 50 wt%, and the set value is 150 to 300 MPa when the fine powder is 100 wt%. The change in the range of the set pressure with respect to the content is the same for other raw materials, and even when the raw material powder is Inconel (registered trademark) #718, for example, the set value is 100 to 150 MPa when the fine powder is 80 wt% and the coarse powder is 20 wt%.

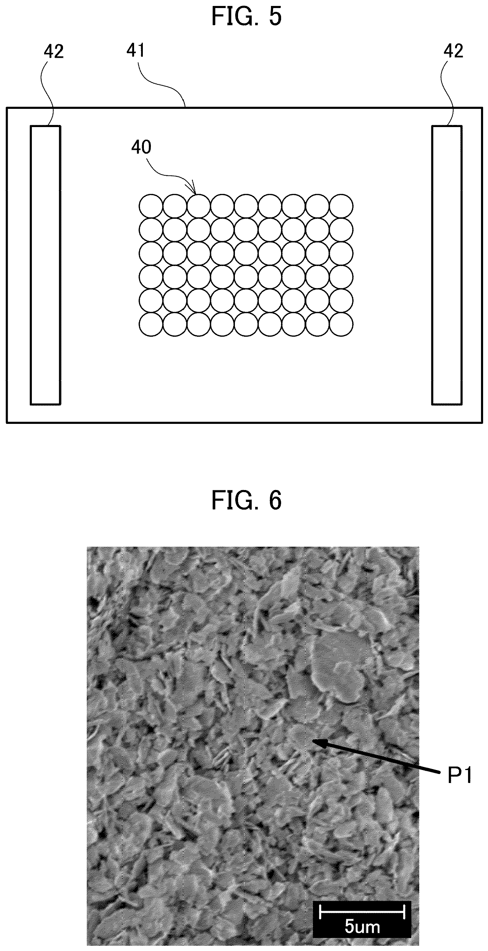

The sintering step S14 is a step of sintering the green compact to form the sintered body. FIG. 5 is a diagram showing a sintering method of the green compact 40. The green compact 40 is sintered using a heating furnace 41 such as a vacuum heating furnace or an atmosphere furnace. First, the green compact 40 is set in the heating furnace 41. In a vacuum, an inert atmosphere (e.g., Ar gas), or a reducing atmosphere (e.g., a mixed gas of 95 wt% Ar and 5 wt% H₂), the green compact 40 is subjected to heating treatment by a heater 42 to form a sintered body.

The sintering temperature of the green compact 40 is set depending on the component of the raw material powder. In the present embodiment, the raw material powder is a powder containing, as the component, any of a Co-base alloy, a Ni-base alloy, and an Fe-based alloy. In this case, the sintering temperature of the green compact 40 is set to a value in the range from 600°C to 950°C. The holding time under the sintering temperature is 5 to 15 hours. The specific time is adopted in which some of green compacts 40 obtained by the compression molding step S13 are experimentally sintered as samples, and the electrical resistivity becomes 1 to 30 mΩ·cm. Thus, the binder and the wax contained in the green compact 40 can be removed, and it is possible to obtain moderately strong bonds among the powder particles of the green compact 40.

By the above steps, the electrode 15 having the specific surface area of 1.3 to 8.0 m²/g can be obtained. With the specific surface area having the above value, the electrode 15 has the electrical resistivity of 1 to 30 mΩ·cm and a density of 3.0 to 5.0 g/cm³. The technical effect of the fabricated electrode 15 is as described above.

Particles of each of the fine powder and the coarse powder remain in the electrode 15 without being melted, and can be observed by a microscope such as a scanning electron microscope (SEM). FIGs. 6 to 8 are electron microscopic images (SEM images) each showing a cross section of the electrode 15 formed by the producing method according to the present embodiment. FIG. 6 shows a cross section of the electrode 15 made of a fine powder of Stellite #31. The median diameter (D50) of the fine powder used for producing the electrode 15 is 1.5 um. As shown in FIG. 6, the fine powder is densely packed, and the scaly particles P1 remain without being melted. In addition, voids (spaces) among the particles are found, and it can be seen that the electrode 15 is a porous body.

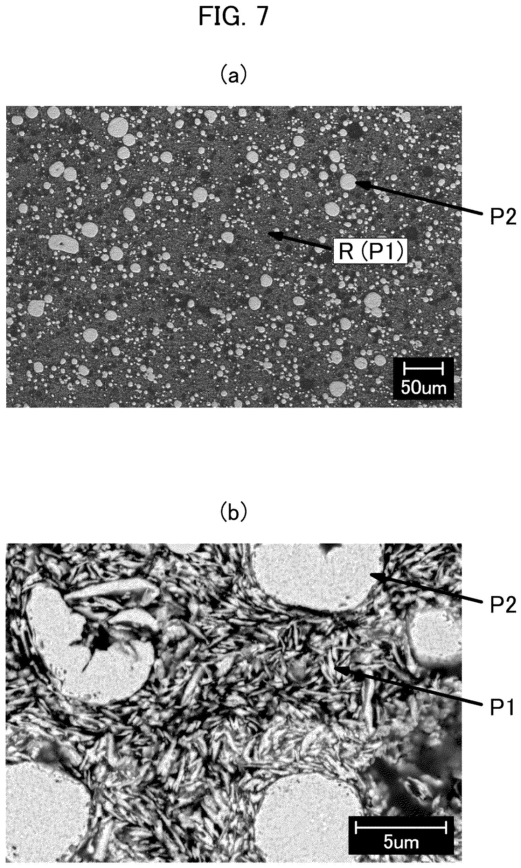

FIG. 7 shows cross sections of the electrode 15 made of the mixed powder of the fine powder (30 wt%) of Stellite #31 and the coarse powder (70 wt%) thereof. FIG. 7(a) is an observation image at a low magnification, and FIG. 7(b) is an observation image at a high magnification. The median size (D50) of the fine powder used for producing the electrode 15 is 1.5 um, and the maximum particle size of the coarse powder is 22 um. From FIG. 7(a), the blocky particles P2 of the coarse powder scattered in the fine powder can be confirmed. The maximum particle size of the blocky particles P2 is about 20 um. From FIG. 7(b), it can be seen that the gray area R shown in FIG. 7(a) is occupied by the scaly particles P1 of the fine powder. However, as in FIG. 6, the fine powder shown in FIG. 7(b) is also densely packed while maintaining small spaces. That is, in any examples, it can be seen that the specific surface area of the fine powder formed of the scaly particles greatly contributes to the specific surface area of the electrode 15.

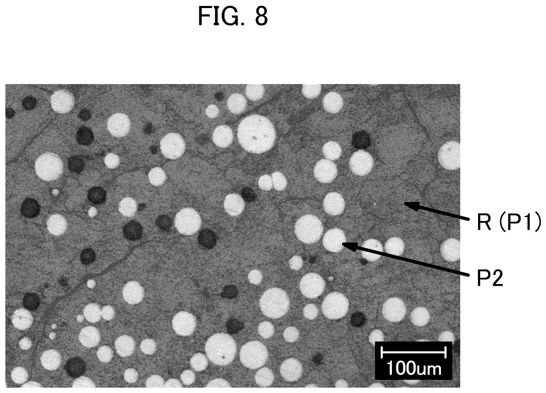

FIG. 8 shows a cross section of the electrode 15 made of a mixed powder of a fine powder (80 wt%) of Inconel #718 and a coarse powder (20 wt%) thereof. The median diameter (D50) of the fine powder used for producing the electrode 15 is 1.5 um, and the maximum particle size of the coarse powder is 53 um. Similar to the cross section shown in FIG. 7(a), blocky particles P2 of the coarse powder scattered in the area R of the fine powder shown in gray can also be seen from FIG. 8. Here, the dark circulars indicate area where the blocky particles P2 fell off during the observation.

### (Second Embodiment: Electrode)

Next, the electrode 15 according to the second embodiment of the present disclosure will be described. The electrode 15 according to the second embodiment is a sintered body made of a powder (hereinafter referred to as raw material powder) containing any of Co (cobalt), Ni (nickel), and Fe (iron) as a single raw material thereof. That is, the sintered body of the electrode 15 contains a raw material powder (i.e., sintered particles of the raw material powder) as the constituent powder. The raw material powder is produced, for example, by the carbonyl method, and the shapes of the particles are approximately spherical. As in the first embodiment, in the electrode 15 according to the second embodiment, the particles of the raw material powder remain in the electrode 15 without being melted, and can be observed by the microscope such as a scanning electron microscope (SEM).

The median diameter (D50) of the raw material powder is 4 um or less. For example, Co powder having a median diameter of 3.3 um can be used as the raw material powder of Co. For example, Co powder produced by Global Tungsten & Powders Corporation (GTP) can be adopted as such powder. The specific surface area of this powder is 1.9 m²/g.

The specific surface area of the electrode 15 according to the second embodiment has a value in the range of 0.8 m²/g to 1.2 m²/g, and the electrical resistivity has a value in the range of 3 mΩ·cm to 30 mΩ·cm. The specific surface area and the electrical resistivity are set within the aforementioned ranges by adjusting the set pressure in the compression molding and the sintering temperature in the sintering of the green compact. The density of the electrode 15 according to the second embodiment has a value in the range from 2.4 g/cm³ to 3.0 g/cm³.

The electrode 15 according to the second embodiment also provides the same technical effect as the electrode 15 according to the first embodiment. Since the specific surface area and the electrical resistivity have the values described above, the density of the electrode is not excessively large and the excessive heat conduction in the electrode 15 is also suppressed. In addition, since the high temperature region (i.e., plasma) at the tip of the electrode generated by the electric discharge is kept warm, the temperature at the tip of the electrode 15 becomes high and the electrode material is likely to be melted or semi-melted. Therefore, it is possible to stably generate the electric discharge in the coating film formation.

### (Second Embodiment: Electrode Producing Method)

Next, a producing method of the electrode 15 according to the second embodiment will be described. The process of the producing method according to the second embodiment is the same as the process of the producing method according to the first embodiment except that the pulverization step S11 is omitted. This is because a powder having a particle size which can provide the specific surface area described above is easily available. Therefore, in the following description, descriptions that overlap with those of the first embodiment will be omitted. However, since the metal powder to be processed is only the raw material powder and its components are different from those of the electrode 15 according to the first embodiment, the set values of each process are changed. Further, the present embodiment does not exclude the pulverization step S11. Specifically, the pulverization step S11 for the raw material powder may be performed until the median diameter described above is obtained.

In the granulation step S12 according to the second embodiment, a slurry containing the raw material powder is produced, and the granulated powder 36 as a material of the green compact is produced. When the total amount of the raw material powder is 100 wt%, for example, the slurry is prepared by mixing the intermediate powder and 2 to 3 wt% of the binder in 200 wt% of an organic solvent and stirring them. The components of this binder are the same as those of the binder used in the first embodiment. Further, in the same manner as in the first embodiment, after producing the slurry, it is granulated using a spray dryer or the like to form a granulated powder 36 (see FIG. 4) .

Next, the compression molding step S13 is performed using the die 30 shown in FIG. 4. As a result, the granulated powder 36 in the main die 31 is compressed and the green compact is molded. The set pressure (surface pressure) during the compression molding is 10 to 30 MPa. The metal powder such as Co powder used in the second embodiment is softer than the alloy powder used in the first embodiment. Therefore, the set pressure of the second embodiment is set to a value lower than the set pressure of the first embodiment.

Next, as in the first embodiment, the sintering step S14 is performed for the green compact 40 formed by the compression molding step S13. At this time, the sintering temperature is set to a value in the range from 450 °C to 600 °C., and the sintering is performed in vacuum or in an inert atmosphere (e.g., Ar gas). The holding time under the sintering temperature is 4 to 15 hours. The specific time is adopted in which some of the green compacts 40 obtained by the compression molding step S13 are experimentally sintered as samples, and the electrical resistivity becomes 3 to 30 mΩ·cm. Thus, the binder and the wax contained in the green compact 40 can be removed, and it is possible to obtain moderately strong bonds among the powder particles of the green compact 40.

By the above steps, the electrode 15 having the specific surface area of 0.8 to 1.2 m²/g can be obtained. With the specific surface area having the above value, the electrode 15 has the electrical resistivity of 3 to 30 mΩ·cm and a density of 2.4 to 3.0 g/cm³. The producing method according to the second embodiment can also produce the electrode 15 providing the same technical effects as the first embodiment.

It should be noted that the present disclosure is not limited to the above-described embodiments, but is presented by the description of the claims, and further includes all changes within the meaning and scope of the description and the scope of the claims.

## Claims

1. An electrode for forming a coating film on a surface of a workpiece, made of a material of an electrode material or a reactive substance of the material of the electrode, by electrical discharge surface treatment that generates discharges between the electrode and the workpiece, the electrode comprising
a sintered body as the electrode, made of a powder containing any of a Co-base alloy, a Ni-base alloy, and an Fe-based alloy as a raw material thereof, wherein
the sintered body includes a fine powder of the raw material formed in scaly shapes,
a median diameter of the fine powder is 3.0 um or less,
a specific surface area of the sintered body has a value in a range from 0.8 m²/g to 10 m²/g, and
an electrical resistivity of the sintered body has a value in a range from 3 mΩ·cm to 30 mΩ·cm.

2. The electrode according to claim 1, wherein
the sintered body further includes a coarse powder of the raw material,
a particle size of the coarse powder is larger than that of the fine powder,
the coarse powder includes particles with a maximum particle size of 53 um, and
a proportion of the coarse powder in a mixed powder of the fine powder and the coarse powder is 70 wt% or less.

3. The electrode according to claim 1 or 2, wherein
a density of the sintered body has a value in a range from 3.0 g/cm³ to 5.0 g/cm³.

4. A method for producing an electrode for forming a coating film on a surface of a workpiece, made of a material of an electrode material or a reactive substance of the material of the electrode, by electrical discharge surface treatment that generates discharges between the electrode and the workpiece, the method comprising:
producing granulated powder by granulating a powder containing any of a Co-base alloy, a Ni-base alloy, and an Fe-based alloy as a raw material thereof;
forming a green compact by compression molding of the granulated powder;
forming a sintered body as the electrode by sintering the green compact, wherein
the powder includes a fine powder having a median diameter of 3.0 um or less and formed in scaly shapes,
a pressure in the compression molding and a sintering temperature in the sintering are set to values at which a specific surface area of the sintered body has a value in a range from 0.8 m²/g to 10 m²/g and an electrical resistivity of the sintered body has a value in a range from 3 mΩ·cm to 30 mΩ·cm,
the pressure in the compression molding is set to a value in a range from 50 MPa to 300 MPa, and
the sintering temperature is set to a value in a range from 450°C to 950°C.

5. The method according to claim 4, wherein
the sintered body further includes a coarse powder of the raw material,
a particle size of the coarse powder is larger than that of the fine powder,
the coarse powder includes particles with a maximum particle size of 53 um, and
a proportion of the coarse powder in a mixed powder of the fine powder and the coarse powder is 70 wt% or less.

6. An electrode for forming a coating film on a surface of a workpiece, made of a material of an electrode material or a reactive substance of the material of the electrode, by electrical discharge surface treatment that generates discharges between the electrode and the workpiece, the electrode comprising
a sintered body as the electrode, made of a powder containing any of Co, Ni, and Fe as a single raw material thereof, wherein
the sintered body includes a fine powder of the raw material formed in scaly shapes,
a median diameter of the fine powder is 4 um or less,
a specific surface area of the sintered body has a value in a range from 0.8 m²/g to 1.2 m²/g, and
an electrical resistivity of the sintered body has a value in a range from 3 mΩ·cm to 30 mΩ·cm.

7. The electrode according to claim 6, wherein
a density of the sintered body has a value in a range from 2.4 g/cm³ to 3.0 g/cm³.

8. A method for producing an electrode for forming a coating film on a surface of a workpiece, made of a material of an electrode material or a reactive substance of the material of the electrode, by electrical discharge surface treatment that generates discharges between the electrode and the workpiece, the method comprising:
producing granulated powder by granulating a powder containing any of Co, Ni, and Fe as a single raw material thereof;
forming a green compact by compression molding of the granulated powder;
forming a sintered body as the electrode by sintering the green compact, wherein
the powder includes a fine powder having a median diameter of 3.0 um or less and formed in scaly shapes,
a pressure in the compression molding and a sintering temperature in the sintering are set to values at which a specific surface area of the sintered body has a value in a range from 0.8 m²/g to 1.2 m²/g and an electrical resistivity of the sintered body has a value in a range from 3 mΩ·cm to 30 mΩ·cm,
the pressure in the compression molding is set to a value in a range from 10 MPa to 30 MPa, and
the sintering temperature is set to a value in a range from 450°C to 950°C.
